# EUROPEAN PATENT APPLICATION

(11) **EP 4 250 434 A1**
(43) Date of publication of application: **27.09.2023**
(21) Application number: 22883879.3
(22) Date of filing: 13.10.2022
(51) Int. Cl.: H01M 10/52, H01M 50/105, H01M 50/30, H01M 10/04

(54) **SECONDARY BATTERY INCLUDING POUCH WITH GAS ADSORBENT INTERPOSED THEREIN AND METHOD FOR MANUFACTURING SAME**

(30) Priority: 20.10.2021 KR 20210139834
(71) Applicant: LG Energy Solution, Ltd., Seoul 07335 (KR)
(72) Inventor: CHO, Ju Hyeon, Daejeon 34122 (KR); YU, Sung Hoon, Daejeon 34122 (KR); HWANG, Gyu Ok, Daejeon 34122 (KR); SUNG, Nak Gi, Daejeon 34122 (KR)
(74) Representative: Goddar, Heinz J.
(86) International application number: PCT/KR2022/015513
(87) International publication number: WO 2023/068656

(57) **Abstract**

The present invention relates to the secondary battery that contains a pouch coated with a gas absorbent and its manufacturing method, and the composition of the present invention includes: a pouch case, a cell that is stored inside the pouch case, and a gas absorbent interposed on the mating surface of the surplus part that is formed as the pouch case is folded.

## Description

### [Technical Field]

The present invention relates to a secondary battery that includes a pouch coated with a gas absorbent and its manufacturing method.

This application claims the benefit of priority based on Korean Patent Application No. 10-2021-0139834, filed on October 20, 2021, and the entire contents of the Korean patent application are incorporated herein by reference.

### [Background Technology of the Invention]

As the technology for not only mobile devices such as mobile phones, smartphones, laptops, and camcorders, but also vehicles such as electric vehicles develop, the demand for secondary batteries as a power source has been dramatically increasing, and many researches have been done to meet various technological development needs fo.r secondary batteries.

In terms of the shape of a secondary battery, the demand has been increasing around a pouch-type secondary battery and a prismatic secondary battery that can be applied to appliances such as mobile phones by having a thin layer.

A pouch-type secondary battery has advantages of having a low manufacturing cost, having a high energy density, and being easy to form a large-capacity battery pack through serial/parallel connection, and it is recently drawing attention as a power source for electric vehicles or hybrid vehicles.

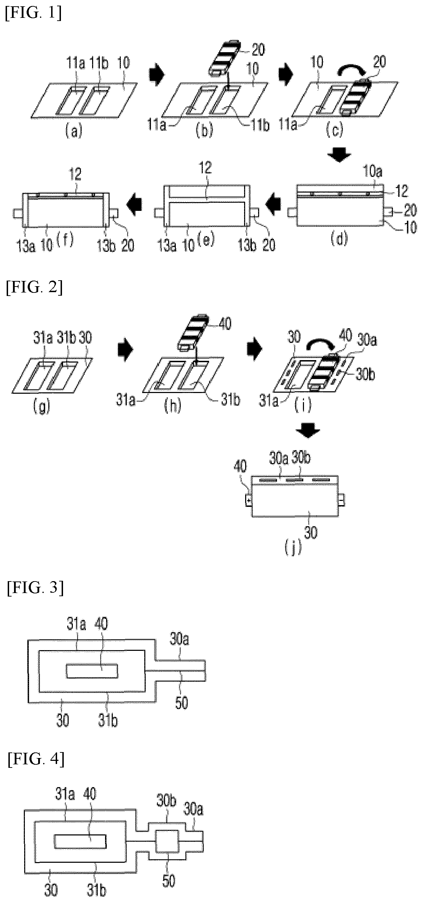

FIG. 1 illustrates a diagram of a manufacturing process of a typical pouch-type secondary battery.

As illustrated in FIG. 1, the manufacturing process of a typical pouch-type secondary battery includes: (a) molding an upper storage part 11a and a lower storage part 11b in a pouch case 10; (b) inserting a cell 20, which is an electrode assembly, into the lower storage part 1 1b of the pouch case 10; (c) folding the pouch case 10 so that the upper storage part 11a of the pouch case 10 covers the cell 20 stored in the lower storage part 1 1b of the pouch case 10; (d) forming a side sealing part 12 by heat staking a surplus part 10a formed on the side of the pouch case 10; (e) forming an upper surface sealing part 13a and a lower surface sealing part 13b by heat staking the upper surface and the lower surface of the pouch case 10 after injecting electrolyte in liquid state into the pouch case 10 and removing gas by going through an activation process; and (f) cutting the surplus part 10a except for the side sealing part 12 of the pouch case 10.

Right after the pouch case 10 gets injected with electrolyte in liquid state, gas is generated from reacting with the electrolyte during charging, aging, and charging-discharging, and the surplus part 10a is formed to be longer than the length of the cell 20 in order to form a gas pocket part for collecting gas.

The surplus part 10a is a part that is discarded during the process of manufacturing a secondary battery, and the manufacturing cost of a secondary battery increases as the surface area of the surplus part 10a increases. Moreover, because the surplus part 10a collects as much gas as is discharged by the gas pressure inside the battery, the surplus part 10 does not have a high enough degasification efficiency after activation.

### [Patent Document]

Korean Patent Publication No. 10-2021-0014345
Korean Patent Publication No. 10-2008-0011477

### [Description of the Invention]

### [Technical Problem]

The present invention is directed to solve aforementioned conventional problems, and the present invention is directed to provide a secondary battery including a pouch coated with a gas absorbent and its manufacturing method, which can reduce the manufacturing cost of the secondary battery by reducing the surplus part of the pouch case that is discarded during the process of manufacturing the secondary battery. This may be done by designing the pouch case so that the short-axis surface has a length that is 10~90% of the width of the folded pouch case where a pouch case is folded, the surplus part includes a long-axis surface where the surplus part is provided along the side of the pouch case and a short-axis surface that is perpendicular to the long-axis surface, and interposing a gas absorbent on the mating surface of the surplus part of the pouch case.

### [Technical Solution]

As a means of achieving the above-mentioned object, the present invention, in one exemplary embodiment provides a secondary battery that includes:
a pouch case;
a cell that is stored inside the pouch case; and
a gas absorbent interposed on the mating surface of the surplus part that is formed as the pouch case is folded.

Here, the surplus part includes a long-axis surface where the surplus part is provided along the side of the pouch case and a short-axis surface that is perpendicular to the long-axis surface, and the short-axis surface has a length that is 10~90% of a width of the folded pouch case, specifically can have a length that is 20~90%; 30~90%; 40~90%; or 50~90% of the width.

In addition, the gas absorbent may be coated to the mating surface of the surplus part in the form of forming a coating layer; may be coated to the mating surface of the surplus part in a powder form; or may be adhered to the mating surface of the surplus part by being manufactured in a flat shape.

Moreover, the gas absorbent may be continuously or discontinuously interposed along the long-axis surface of the surplus part.

In addition, the gas absorbent may contain Azo-Linked Porous Organic Polymers (ALPs).

Additionally, a gas pocket part for interposing the gas absorbent may be additionally formed in the surplus part.

Furthermore, the present invention, in one exemplary embodiment provides a manufacturing method of a secondary battery that includes:
designing a pouch case so that the short-axis surface has a length of 10~90% with respect to the width of the folded pouch case when the pouch case gets folded, the surplus part comprises a long-axis surface that is arranged along the side of the pouch case and a short-axis surface that is perpendicular to the long-axis surface;
inserting a cell, which is an electrode assembly, into the pouch case;
folding the pouch case after interposing a gas absorbent to the mating surface of the surplus part of the pouch case; and
removing gas using the gas absorbent during an activation process after forming a side sealing part by attaching the surplus part formed on the side of the pouch case.

Here, the gas absorbent may be coated to the mating surface of the surplus part in the form of forming a coating layer; may be coated to the mating surface of the surplus part in a powder form; or may be adhered to the mating surface of the surplus part by being manufactured in a flat shape.

In addition, the gas absorbent may contain Azo-Linked Porous Organic Polymers(ALPs).

Moreover, the manufacturing method of the secondary battery may additionally include removing the side surplus part of the gas absorbent-interposed pouch case after removing gas.

### [Advantageous Effects]

The secondary battery according to the present invention can not only remove gas generated during the activation of a secondary battery with high efficiency by introducing a gas absorbent on the mating surface of the surplus part during battery assembly, but it can also lower the manufacturing cost of the secondary battery by reducing the surplus part that is discarded during the process of manufacturing the secondary battery.

### [Brief Description of the Drawings]

FIG. 1 is a diagram illustrating a manufacturing process of a typical pouch-type secondary battery.
FIG. 2 is a diagram illustrating a manufacturing process of a secondary battery that includes a pouch coated with a gas absorbent according to the first embodiment of the present invention.
FIG. 3 is a cross-sectional view of a secondary battery that includes a pouch coated with a gas absorbent according to the second embodiment of the present invention.
FIG. 4 is a cross-sectional view of a secondary battery that includes a pouch coated with a gas absorbent according to the third embodiment of the present invention.

### [Best Mode for Carrying Out the invention]

Hereinafter, in order to describe in detail to the extent that those skilled in the art can easily carry out the present invention, it will be explained in detail with reference to drawings accompanying exemplary embodiments of the present invention. By the explanation of exemplary embodiments, other objectives, features, and operational benefits including the objective, the operation, and the effect of the present invention will become clearer.

On a side note, the embodiments disclosed herein are only suggested to help those skilled in the art understand by selecting the most preferred exemplary embodiment among the various practical examples, and the present invention is not limited to specific embodiments, and may include all modifications, equivalents or alternatives within the spirit and technical scope of the present invention.

In addition, the terms and the words used in the present specification and claims should not be interpreted as being limited to conventional or dictionary meanings, and should be interpreted with meanings and concepts which are consistent with the technological scope of the invention based on the principle that the inventors have appropriately defined concepts of the terms in order to describe the invention in the best way. For example, a singular expression may include a plural expression unless they are clearly defined differently in context, and an expression related to direction is set based on the position expressed on the drawing for the convenience of explanation.

### First Embodiment

FIG. 2 is a diagram illustrating a manufacturing process of a secondary battery that includes a pouch coated with a gas absorbent according to the first embodiment of the present invention.

As illustrated in FIG. 2, the manufacturing process of the secondary battery that includes the pouch coated with the gas absorbent according to the first embodiment of the present invention comprises: (g) molding an upper storage part 31a and a lower storage part 3 1b on the pouch case 30 which is designed so that the short-axis surface can have a length that is 10~90% of the width of the folded pouch case when the pouch case gets folded, the surplus part comprises a long-axis surface that is arranged along the side of the pouch case and a short-axis surface that is perpendicular to the long-axis surface; (h) inserting a cell 40, which is an electrode assembly, into the lower storage part 31b of the pouch case 30; (i) folding the pouch case 30 so that the upper storage part 31a of the pouch case 30 covers the cell 40 stored in the lower storage part 31b after interposing a gas absorbent 50 on a part of the mating surface of the surplus part 30a of the pouch case 30; and (j) removing gas using the gas absorbent 50 during the activation process after forming a side sealing part by heat staking the surplus part 30a that is formed on the side of the pouch case 30.

The gas absorbent 50 may be coated to the mating surface of the surplus part 30a with a shape that forms a coating layer.

The gas absorbent 50 may be coated to part of the mating surface of the surplus part 30a in powder form.

The gas absorbent 50 may be adhered to part of the mating surface of the surplus part 30a by being manufactured in a flat-type.

The gas absorbent 50 may be discontinuously interposed along the long-axis surface of the surplus part 30a.

The gas absorbent 50 uses Azo-Linked Porous Organic Polymers(ALPs), and the gas absorbent 50 can be manufactured by polymerizing one of the monomers selected from the group consisting of 1,3,5,7-tetrakis(4-aminophenyl)adamantine (TAPA), 2,6,12-triaminotriptycene (TAT), tetrakis(4-aminophenyl)methane (TAM), or 1,3,5-tris(4-aminophenyl)benzene (TAB).

In addition, the manufacturing process includes (j) removing the side surplus part of the gas absorbent-interposed pouch case after removing gas. A secondary battery degassed with gas generated during activation may be obtained through this process.

### Second Embodiment

FIG. 3 is a cross-sectional view of a secondary battery that includes a pouch coated with a gas absorbent according to the second embodiment of the present invention.

As illustrated in FIG. 3, a secondary battery that includes a pouch coated with a gas absorbent according to the second embodiment of the present invention includes a pouch case 30 with an upper storage part 31a and a lower storage part 31b, a cell 40 stored in a place formed by the upper storage part 31a and the lower storage part 31b, and a gas absorbent 50 interposed inside the surplus part 30a that is formed by folding the pouch case 30.

The surplus part 30a includes a long-axis surface that is arranged along the side of the pouch case 30 and a short-axis surface that is perpendicular to the long-axis surface, and the short-axis surface has a length that is 10~90% of the width of the folded pouch case 30.

The gas absorbent 50 may be coated to the mating surface of the surplus part 30a in the form of forming a coating layer.

The gas absorbent 50 may be coated to the mating surface of the surplus part 30a in a powder form.

The gas absorbent 50 may be adhered to the mating surface of the surplus part 30a by being manufactured in a flat shape.

The gas absorbent 50 may be continuously or discontinuously interposed along the long-axis surface of the surplus part 30a.

The gas absorbent 50 uses Azo-Linked Porous Organic Polymers(ALPs), and the gas absorbent 50 can be manufactured by polymerizing one of the monomers selected from the group consisting of 1,3,5,7-tetrakis(4-aminophenyl)adamantine (TAPA), 2,6,12-triaminotriptycene (TAT), tetrakis(4-aminophenyl)methane (TAM), or 1,3,5-tris(4-aminophenyl)benzene (TAB).

### Third Embodiment

FIG. 4 is a cross-sectional view of a secondary battery that includes a pouch coated with a gas absorbent according to the third embodiment of the present invention.

As illustrated in FIG. 4, a secondary battery that includes a pouch coated with a gas absorbent according to the third embodiment of the present invention includes a pouch case 30 with an upper storage part 31a and a lower storage part 31b, a cell 40 stored in a place formed by the upper storage part 31a and the lower storage part 31b, a gas absorbent 50 interposed inside the surplus part 30a which is formed by folding the pouch case 30, and a gas pocket part 30b for interposing the gas absorbent 50 is formed in the surplus part 30a.

The surplus part 30a includes a long-axis surface that is provided along the side of the pouch case 30 and a short-axis surface that is perpendicular to the long-axis surface, and the short-axis surface has a length that is 10~90% of the width of the folded pouch case 30.

The gas absorbent 50 may be coated to the mating surface of the surplus part 30a in the form of forming a coating layer.

The gas absorbent 50 may be coated to part of the mating surface of the surplus part 30a in a powder form.

The gas absorbent 50 may be adhered to part of the mating surface of the surplus part 30a by being manufactured in a flat shape.

The gas absorbent 50 may be continuously or discontinuously interposed along the long-axis surface of the surplus part 30a.

The gas absorbent 50 uses Azo-Linked Porous Organic Polymers(ALPs), and the gas absorbent 50 can be manufactured by polymerizing one of the monomers selected from the group consisting of 1,3,5,7-tetrakis(4-aminophenyl)adamantine (TAPA), 2,6,12-triaminotriptycene (TAT), tetrakis(4-aminophenyl)methane (TAM), or 1,3,5-tris(4-aminophenyl)benzene (TAB).

The secondary battery containing a pouch coated with a gas absorbent and its manufacturing method according to the embodiments of the present invention by the above composition are as follows:
First, as illustrated in (g) of FIG. 2, mold an upper storage part 31a and a lower storage part 31b in the pouch case 30.

Then, as illustrated in (h) of FIG. 2, insert a cell 40, which is an electrode assembly, into the lower storage part 31b of the pouch case 30.

After the cell 40, which is an electrode assembly, gets inserted into the lower storage part 31b of the pouch case 30, as illustrated in (i) of FIG. 2, interpose a gas absorbent 50 on a part of the mating surface of the surplus part 30a of the pouch case 30.

In this case, the gas absorbent 50 may be coated to the mating surface of the surplus part 30a in the form of forming a coating layer, or the gas absorbent 50 may be coated to the mating surface of the surplus part 30a in a powder form, or the gas absorbent 50 may be adhered to the mating surface of the surplus part 30a by being manufactured in a flat shape.

In addition, the gas absorbent 50 may be continuously or discontinuously interposed along the long-axis surface of the surplus part 30a.

After the gas absorbent 50 is interposed on the mating surface of the surplus part 30a likewise, fold the pouch case 30 so that the upper storage part 31a of the pouch case 30 covers over the cell 40 stored in the lower storage part 31b.

In this case, the surplus part 30a includes a long-axis surface that is arranged along the side of the pouch case 30 and a short-axis surface that is perpendicular to the long-axis surface, and the short-axis surface is designed to have a length that is 10~90% of the width of the folded pouch case 30.

After the pouch case 30 gets folded, gas gets removed using a gas absorbent 50 during the activation process after forming a side sealing part by heat staking the surplus part 30a formed on the side of the pouch case 30.

### [Reference Numerals]

10, 30: POUCH CASE
20, 40: CELL
50: GAS ABSORBENT

## Claims

1. A secondary battery comprising:
a pouch case;
a cell that is stored inside the pouch case; and
a gas absorbent interposed on a mating surface of the surplus part that is formed as the
pouch case is folded.

2. The secondary battery of claim 1, wherein the surplus part comprises a long-axis surface that is arranged along the side of the pouch case and a short-axis surface that is perpendicular to the long-axis surface, and
the short-axis surface has a length that is 10~90% of a width of the folded pouch case.

3. The secondary battery of claim 1, wherein the gas absorbent is coated to the mating surface of the surplus part in the form of forming a coating layer.

4. The secondary battery of claim 1, wherein the gas absorbent is coated to the mating surface of the surplus part in a powder form.

5. The secondary battery of claim 1, wherein the gas absorbent is adhered to the mating surface of the surplus part by being manufactured in a flat shape.

6. The secondary battery of claim 1, wherein the gas absorbent is continuously interposed along the long-axis surface of the surplus part.

7. The secondary battery of claim 1, wherein the gas absorbent is discontinuously interposed along the long-axis surface of the surplus part.

8. The secondary battery of claim 1, wherein the gas absorbent comprises Azo-Linked Porous Organic Polymers (ALPs).

9. The secondary battery of claim 1, wherein a gas pocket part for interposing the gas absorbent is additionally formed in the surplus part.

10. A manufacturing method of a secondary battery comprising:
designing a pouch case so that the short-axis surface has a length of 10~90% with respect to the width of the folded pouch case when the pouch case gets folded, the surplus part comprises a long-axis surface that is arranged along the side of the pouch case and a short-axis surface that is perpendicular to the long-axis surface;
inserting a cell, which is an electrode assembly, into the pouch case;
folding the pouch case after interposing a gas absorbent to the mating surface of the surplus part of the pouch case; and
removing gas using the gas absorbent during activation process after forming a side sealing part by attaching the surplus part formed on the side of the pouch case.

11. The manufacturing method of the secondary battery of claim 10, wherein the gas absorbent is coated to the mating surface of the surplus part in the form of forming a coating layer.

12. The manufacturing method of the secondary battery of claim 10, wherein the gas absorbent is coated to the mating surface of the surplus part in a powder form.

13. The manufacturing method of the secondary battery of claim 10, wherein the gas absorbent is adhered to the mating surface of the surplus part by being manufactured in a flat shape.

14. The manufacturing method of the secondary battery of claim 10, wherein the gas absorbent comprises Azo-Linked Porous Organic Polymers(ALPs).

15. The manufacturing method of the secondary battery of claim 10, removing the side surplus part of the gas absorbent-interposed pouch case is further included after removing gas.
